# EUROPEAN PATENT SPECIFICATION

(11) **EP 2 501 544 B1**
(45) Date of publication and mention of the grant of the patent: **12.02.2020**
(21) Application number: 10830544.2
(22) Date of filing: 05.11.2010
(51) Int. Cl.: B32B 7/12, B32B 5/26, B32B 37/10

(54) **ELASTIC FABRIC WITH ADHESIVE**
ELASTISCHE FASER MIT EINEM HAFTMITTEL
TISSU ÉLASTIQUE À ADHÉSIF

(30) Priority: 16.11.2009 US 261594 P
(43) Date of publication of application: 26.09.2012
(73) Proprietor: The LYCRA Company UK Limited, Manchester M2 3DE (GB)
(72) Inventor: LIAO, Tianyi, Chadds Ford PA 19317 (US); COVELLI, Carmen, A., Chadds Ford PA 19317 (US); LIU, Hong, Waynesboro VA 22980 (US); FARMER, Douglas, K., Greensboro NC 27407 (US); WYNEGAR, Fred, C., Wilmington DE 19810 (US)
(74) Representative: Cockerton, Bruce Roger
(86) International application number: PCT/US2010/055559
(87) International publication number: WO 2011/059884

(56) References cited:
- EP-A1- 0 472 942
- EP-A1- 2 093 316
- EP-A2- 0 749 756
- WO-A2-2006/086715
- WO-A2-2010/129828
- JP-A- 3 047 713
- JP-A- 10 505 008
- KR-A- 20020 053 759
- US-A1- 2009 280 290

## Description

### BACKGROUND OF THE INVENTION

### Field of the Invention

The present invention relates to a fabric or garment comprising multiple layers, comprising an adhesive/elastic fabric composite article including an elastomeric/stretch fabric including primarily elastomeric fibers in combination with an adhesive. Where the adhesive is coated on the stretch/elastomeric fabric, the composite article is essentially an elastic film. The composite articles can be bonded or attached to other fabrics that may optionally be elastic fabrics. Methods of making the articles are also included.

### Summary of Related Technology

Various polymers such as polyamides, polyolefins, and polyurethanes (including polyurethaneureas) can be used as adhesives for various substrates, including textile fabrics. Examples of films include thermoplastic polyurethane, polyamide, and polyolefin films commercially available from Bemis Associates, Shirley, MA. Examples of polyurethane films which are cast and dried from an aqueous polyurethane dispersion are disclosed in U.S. Pat. No. 7,240,371 and U.S. Patent Application Publication No. 2008/0004395A1. Traditional adhesives are not air permeable. Within the areas bonded with adhesive film, the garment is not breathable, which results in a hot and uncomfortable feeling for the wearer of such a garment. In order to obtain adequate strength and bond force, many films are made with greater thickness which can result in unfavorably stiff and harsh fabrics and garments. The wash durability of the film as bonded in a garment is an issue for garments that will endure repeated household and/or commercial laundering. Currently, in order to achieve a durable bond, high bonding temperature and long duration is necessary.

### SUMMARY OF THE INVENTION

The present invention relates to a fabric or garment comprising multiple layers comprising:
(a) one stretch fabric comprising 50% to 100% elastomeric fibers by weight of the stretch fabric and
(b) at least one adhesive; wherein the adhesive is coated on the stretch fabric.

In a further aspect the present invention provides a method of making a fabric or garment according to the invention, comprising:
(a) providing a fabric with 100% elastomeric fibers;
(b) adding adhesive polymers onto the fabric to form an adhesive film; and
(c) bonding the adhesive film with garment fabrics.

Bondable elastic films can provide a reduction in bonding temperature and bonding time. This translates to a reduction in the amount of energy, production time, and the likelihood of damaging fine fabrics.

The adhesive/elastic fabric composite article includes at least one heat-activated adhesive, such as an adhesive polymer, and a stretch/elastic fabric including about 50% or greater elastomeric fibers based on the weight of the fabric, including up to about 100% elastomeric fibers. The stretch/elastic fabrics provide excellent recovery power and shape retention ability, while the adhesive provides strong bonding force. The adhesive is selected from the group consisting of polyurethanes, polyolefins, polyamides, polyesters and combinations thereof. The addition of the stretch/elastic fabric to the film allows an increase of the strength and softness of the film. The adhesive/elastic fabric composite article also can provide breathability otherwise unattainable for films.

The combination of the elastic fabric with adhesive makes the stretch and recovery performance of adhesive less important; thus broadening the options for selecting an appropriate adhesive. This is due the improved recovery power of the elastic fabric in comparison to a conventional film which would provide both recovery power and adhesiveness. Therefore, the adhesive/elastic fabric composite articles provide a high quality adhesive film with high recover power and high adhesive force can be produced. Due to many pores and holes between fibers within elastic fabric, bounding heat can be easier transformed. It is possible to bond the fabrics with higher efficiency, low temperature, shorter time and less damage to fabrics.

The adhesive/elastic fabric composite article includes an elastic fabric from 50% to 100% elastomeric fibers by weight of the fabric, such as 100% elastomeric fiber with no companion fiber. The fabric may have a construction selected from the group consisting of weft knit (such as circular knit), warp knit, wovens and nonwoven.

In a further embodiment is a method of making a fabric or garment comprising multiple layers including:
(a) providing a stretch fabric with 100% elastomeric fibers, fusible fiber as a option ;
(b) adding adhesive polymers onto the stretch fabrics to form adhesive film;
(c) bonding of adhesive film with garment fabrics.

### DETAILED DESCRIPTION OF THE INVENTION

Elastomeric fibers are commonly used to provide stretch and elastic recovery in fabrics and garments. "Elastomeric fibers" are either a continuous filament (optionally a coalesced multifilament) or a plurality of filaments, free of diluents, which have a break elongation in excess of 100% independent of any crimp. An elastomeric fiber when (1) stretched to twice its length; (2) held for one minute; and (3) released, retracts to less than 1.5 times its original length within one minute of being released. As used in the text of this specification, "elastomeric fibers" means at least one elastomeric fiber or filament. Such elastomeric fibers include but are not limited to rubber filament, biconstituent filament (which may be based on rubber, polyurethane, etc.), lastol, and spandex. The terms "elastomeric" and "elastic" are used interchangeably throughout the specification.

"Spandex" is a manufactured filament in which the filament-forming substance is a long chain synthetic polymer comprised of at least 85% by weight of segmented polyurethane.

"Elastoester" is a manufactured filament in which the fiber forming substance is a long chain synthetic polymer composed of at least 50% by weight of aliphatic polyether and at least 35% by weight of polyester. Although not elastomeric, elastoester may be included in some fabrics herein.

"Biconstituent filament" is a continuous filament comprising at least two polymers adhered to each other along the length of the filament, each polymer being in a different generic class, for example, an elastomeric polyetheramide core and a polyamide sheath with lobes or wings. Examples of biconstituent or bicomponent polyurethane (or spandex) fibers/filaments are disclosed in PCT/US09/60370, filed on October 12, 2009.

"Lastol" is a fiber of cross-linked synthetic polymer, with low but significant crystallinity, composed of at least 95 percent by weight of ethylene and at least one other olefin unit. This fiber is elastic and substantially heat resistant.

A "covered" elastomeric fiber is one surrounded by, twisted with, or intermingled with hard yarn. The covered yarn that comprises elastomeric fibers and hard yarns is also termed a "composite yarn" in the text of this specification. The hard-yarn covering serves to protect the elastomeric fibers from abrasion during weaving processes. Such abrasion can result in breaks in the elastomeric fiber with consequential process interruptions and undesired fabric non-uniformities. Further, the covering helps to stabilize the elastomeric fiber elastic behavior, so that the composite yarn elongation can be more uniformly controlled during weaving processes than would be possible with bare elastomeric fibers. The terms "elastic core yarn", "elastic core end", "core end" , "composite yarn", "core yarn" and "composite elastic core yarn" are all used interchangeably throughout the specification.

The composite yarns include: (a) single wrapping of the elastomer fibers with a hard yarn; (b) double wrapping of the elastomer fibers with a hard yarn; (c) continuously covering (i.e., core-spinning) an elastomer fiber with staple fibers, followed by twisting during winding; (d) intermingling and entangling elastomer and hard yarns with an air jet; and (e) twisting an elastomer fibers and hard yarns together.

"Pressing" or "pressed" refers to an article that has been subjected to heat and/or pressure to provide a substantially planar structure

"Dispersion" refers to a system in which the disperse phase consists of finely divided particles, and the continuous phase can be a liquid, solid or gas.

"Aqueous polyurethane dispersion" refers to a composition containing at least a polyurethane or polyurethane urea polymer or prepolymer (such as the polyurethane prepolymer described herein), optionally including a solvent, that has been dispersed in an aqueous medium, such as water, including de-ionized water.

"Solvent," unless otherwise indicated, refers to a non-aqueous medium, wherein the non-aqueous medium includes organic solvents, including volatile organic solvents (such as acetone) and somewhat less volatile organic solvents (such as MEK, or NMP).

"Solvent-free" or "solvent- free system" refers to a composition or dispersion wherein the bulk of the composition or dispersed components has not been dissolved or dispersed in a solvent.

"Molded" article refers to a result by which the shape of an article or shaped article is changed in response to application of heat and/or pressure.

In some embodiments are multiple layer fabrics or garments which include at least one layer of a stretch fabric with 50% to 100% elastomeric fibers which may be either a single elastomeric fiber or a combination of different elastomeric fibers, e.g. spandex and rubber fibers or spandex and lastol fibers. The elastomeric fabric may be present in an amount from 50% by weight of the fabric to 100% by weight of the fabric, including fabrics that include about 70% to 100%, about 80% to 100%, about 90% to 100%, and 95% to 100% (where each percent is the presence of the elastomeric fiber based on the total weight of the fabric).

The stretch/elastic fabric may include only elastomeric fibers, i.e., 100% elastomeric. Alternatively, the elastomeric fibers in the fabric may be combined with one or more companion yarns. Where the elastic fabric includes one or more companion yarns (in addition to the elastomeric fiber), the companion yarn may be either a hard yarn which exhibits little stretch/recovery or an elastic fiber. Examples of hard yarns include yarns made from natural and synthetic fibers. Suitable natural fibers may be cotton or other cellulosic fibers, silk, or wool, among others. Synthetic fibers include nylon, polyester, among others. Blend of different fibers may also be included (blends may include different natural fibers, different synthetic fibers or both. Examples of elastic fibers include polyester bicomponent fiber (available from INVISTA, Wichita, KS as LYCRA®T400® fiber), lastol, rubber, and polybutylene terephthalate (PBT). These fabrics may include the elastomeric fiber with a hard yarn. Alternatively, the fabric may include the elastomeric yarn with another elastic yarn.

"Fabric" refers to a knitted, woven or nonwoven material. The knitted fabric may be flat knit, circular knit, warp knit, narrow elastic, and lace. The woven fabric may be of any construction, for example sateen, twill, plain weave, oxford weave, basket weave, and narrow elastic. The nonwoven material may be meltblown, spun bonded, wet-laid, carded fiber-based staple webs, and the like.

The adhesive/elastic fabric composite article also includes at least one layer of adhesive polymer. The adhesive could be in the form of a film, web, perforated sheet or dispersion. They stick with elastic fibers evenly. The elastic fabric may be placed adjacent to or between the adhesive layers and also may provide stretch and recovery, increased elastic modulus, moldability, shape retention, and flexibility properties for the article.

Adhesives other than polyurethane (including polyurethaneurea) dispersions or films may be included in the adhesive/elastic fabric composite articles in combination with an elastic fabric. Examples of adhesives include any hot melt adhesive, a cyanoacrylate, an epoxy, polyvinyl acetate, a plastisol (including rubber), a thermoplastic (including polyurethanes, polyesters, and polyamides), silicone, latex polymer, a thermoset, a pressure sensitive adhesive and combinations thereof.

The adhesive may be used to prepare the adhesive/elastic fabric composite article or to adhere the composite article to a fabric. An additional adhesive may optionally be included where the composite article is attached to a separate fabric or garment. The fabric or garment may include another fabric construction and may exclude an elastomeric fiber.

The adhesive may include a continuous or discontinuous application for either the elastic fabric/adhesive composite article or where the composite article is attached to a fabric or garment. Examples of discontinuous application of adhesive include the group consisting of dots, vertical lines, horizontal lines, diagonal lines, a grid, and combinations thereof.

An example of a commercially available hot melt adhesive in a dot configuration is available under the tradename Pinbond®, by Freudenberg Gygli GmbH, Weinheim, Germany and is useful for bonding elastic textiles. Moreover, the elastic fabric/adhesive composite article may also be used as an adhesive to adhere more than one layer of any the garment or polyurethaneurea film as described in some aspects.

A variety of different fibers and yarns may be used with the fabrics and garments of some aspects. These include cotton, wool, acrylic, polyamide (nylon), polyester, spandex, regenerated cellulose, rubber (natural or synthetic), bamboo, silk, soy or combinations thereof. Additional layers of fabric may be attached/bonded/etc. to the elastic fabric.

The adhesive/stretch fabric articles may be formed into fabrics and/or garments by any suitable method. The adhesive in the composite article may be the form of attachment, but bonding or sewing may also be useful.

### ANALYTICAL METHOD

In the examples that follow, the following analytical methods were used.

### Peel Strength for Adhesive Bonds

ASTM D903-93, the entire disclosure of which is incorporated herein by reference, was modified for testing of film laminated fabrics. The sample size used for testing was 1 inches x 6 inches (2.5 cm x l5 cm). The separation rate was 2 inches per minute (5 centimeter per minute). Data are reported as pounds of force per inch of sample width (kilogram per millimeter), as shown in the table.

### EXAMPLES

The table below describes some suitable elastic fabric/adhesive composite articles described in some aspects. The "LYCRA® type" category describes the LYCRA® fiber (available from INVSITA, Wichita, KS) used with each fabric which were prepared using 100% LYCRA® fiber. LYCRA® dispersion refers to the dispersion from which LYCRA® 2.0 tapes and films (available from INVSITA, Wichita, KS) are prepared.

| **Sample** | **LYCRA® Type** | **LYCRA® Denier** | **Knit Structure** | **Knit Machine** | **Resin Type** | **Implementation Method** | **Bonding fabrics** | **Bonding Termperature** | **Bonding Time** | **Peel strength (Ib./inch)** |
|---|---|---|---|---|---|---|---|---|---|---|
| #1 | T162C | 40 | plain knit | Satony | LYCRA® dispersion | dip | | | | |
| #2 | T162C | 40 | plain knit | Satony | LYCRA® dispersion | brush coat one time | stretch warp knit | 150C | 20 second | 2.98 |
| #3 | T162C | 40 | plain knit | Satony | LYCRA® dispersion | brush coat one time | stretch warp knit | 150C | 20 second | 4.89 |
| #4 | No finish LYCRA® | 40 | single jersey | Satony | LYCRA® dispersion | roll | stretch warp knit | 150C | 20 second | |
| #5 | T162C | 40 | single jersey | Satony | Henkel adhesive 34 897B | spread | stretch warp knit | 150C | 20 second | |
| #6 | T162C | 40 | single jersey | Satony | Bostik adhesive 2385 | spread | stretch warp knit | 150C | 20 second | |
| #7 | XA LYCRA® | 540 | single jersey | leg knit | LYCRA® dispersion | dip | stretch warp knit | 150C | 20 second | |

## Claims

1. A fabric or garment comprising multiple layers comprising:
(a) one stretch fabric comprising 50% to 100% elastomeric fibers by weight of the stretch fabric and
(b) at least one adhesive; wherein the adhesive is coated on the stretch fabric.

2. The fabric or garment of claim 1, wherein the elastomeric fibers are present from 95% to 100% by weight of the stretch fabric.

3. The fabric or garment according to claim 1 comprising multiple layers comprising:
(a) one stretch fabric comprising 100% elastomeric fibers by weight of the stretch fabric and
(a) at least one adhesive.

4. The fabric or garment of claim 3, wherein said adhesive is a hot melt adhesive, a contact adhesive, a thermoplastic, a polyurethaneurea aqueous dispersion, or a hot melt nonwoven.

5. The fabric or garment of claim 4, wherein said dispersion is free from non-aqueous solvents.

6. The fabric or garment of claim 3, wherein the adhesive is a mix of hot-melt polymers with an aqueous polyurethaneurea dispersion.

7. The fabric or garment of claim 3, wherein said stretch fabric is circular knit, warp knit, wovens and/or nonwoven fabric.

8. The fabric or garment of claim 3, wherein said elastomeric fiber is spandex.

9. A fabric according to claim 3 comprising multiple layers comprising:
(a) one stretch fabric comprising 100% elastomeric fibers by weight of the stretch fabric and
(b) at least one adhesive; wherein the adhesive is coated on said stretch fabric; and
(c) at least two layers.

10. The fabric of claim 9, wherein said at least two layers are selected from the group consisting of (a) two fabric layers, (b) two foam layers, (c) a fabric layer and a foam layer, and combinations thereof.

11. The fabric of claim 9, wherein the fabric is molded.

12. The fabric of claim 9, wherein the fabric is pressed.

13. The fabric of claim 9, wherein the stretch fabric and adhesive defined in (a) and (b) extends throughout the entire area of the multiple layer fabric.

14. The fabric of claim 9, wherein the stretch fabric and adhesive defined in (a) and (b) extends to a portion of the area of the multiple layer fabric.

15. A method of making a fabric or garment of claim 3 comprising:
(a) providing a fabric with 100% elastomeric fibers;
(b) adding adhesive polymers onto the fabric to form an adhesive film; and
(c) bonding the adhesive film with garment fabrics.

## Patentansprüche

1. Gewebe oder Kleidungsstück, umfassend mehrere Lagen umfassend:
(a) ein Stretch-Gewebe umfassend 50 Gew.-% bis 100 Gew.-% Elastomerfasern, bezogen auf das Stretch-Gewebe, und
(b) wenigstens einen Klebstoff; wobei der Klebstoff auf das Stretch-Gewebe geschichtet ist.

2. Gewebe oder Kleidungsstück gemäß Anspruch 1, wobei die Elastomerfasern als 95 Gew.-% bis 100 Gew.-% des Stretch-Gewebes vorhanden sind.

3. Gewebe oder Kleidungsstück gemäß Anspruch 1, umfassend mehrere Lagen umfassend:
(a) ein Stretch-Gewebe umfassend 100 Gew.-% Elastomerfasern, bezogen auf das Stretch-Gewebe, und
(b) wenigstens einen Klebstoff.

4. Gewebe oder Kleidungsstück gemäß Anspruch 3, wobei der Klebstoff ein Heißschmelzklebstoff, ein Kontaktklebstoff, ein Thermoplast, eine wässrige Polyurethanharnstoff-Dispersion oder ein Heißschmelzvlies ist.

5. Gewebe oder Kleidungsstück gemäß Anspruch 4, wobei die Dispersion frei von nichtwässrigen Lösungsmitteln ist.

6. Gewebe oder Kleidungsstück gemäß Anspruch 3, wobei der Klebstoff ein Gemisch von Heißschmelzpolymeren mit einer wässrigen Polyurethanharnstoff-Dispersion ist.

7. Gewebe oder Kleidungsstück gemäß Anspruch 3, wobei das Stretch-Gewebe rundgestrickt, kettengestrickt, gewebt und/oder ein Vliesstoff ist.

8. Gewebe oder Kleidungsstück gemäß Anspruch 3, wobei die Elastomerfaser Spandex ist.

9. Gewebe gemäß Anspruch 3, umfassend mehrere Lagen umfassend:
(a) ein Stretch-Gewebe umfassend 100 Gew.-% Elastomerfasern, bezogen auf das Stretch-Gewebe, und
(b) wenigstens einen Klebstoff; wobei der Klebstoff auf das Stretch-Gewebe geschichtet ist; und
(c) wenigstens zwei Lagen.

10. Gewebe gemäß Anspruch 9, wobei die wenigstens zwei Lagen ausgewählt sind aus der Gruppe bestehend aus (a) zwei Gewebelagen, (b) zwei Schaumstofflagen, (c) einer Gewebelage und einer Schaumstofflage, und Kombinationen davon.

11. Gewebe gemäß Anspruch 9, wobei das Gewebe geformt ist.

12. Gewebe gemäß Anspruch 9, wobei das Gewebe gepresst ist.

13. Gewebe gemäß Anspruch 9, wobei sich das/der in (a) und (b) definierte Stretch-Gewebe und Klebstoff durch die gesamte Fläche des mehrlagigen Gewebes erstrecken.

14. Gewebe gemäß Anspruch 9, wobei sich das/der in (a) und (b) definierte Stretch-Gewebe und Klebstoff durch einen Teil der Fläche des mehrlagigen Gewebes erstrecken.

15. Verfahren zur Herstellung eines Gewebes oder Kleidungsstücks gemäß Anspruch 3, umfassend:
(a) Bereitstellen eines Gewebes mit 100 % Elastomerfasern;
(b) Zugeben von Klebstoffpolymeren auf das Gewebe, um einen Klebstofffilm zu bilden; und
(c) Verbinden des Klebstofffilms mit Kleidungsgeweben.

## Revendications

1. Tissu ou vêtement comprenant de multiples couches comprenant :
(a) un tissu extensible comprenant 50 % à 100 % de fibres élastomères en poids du tissu extensible et
(b) au moins un adhésif ; où l'adhésif est appliqué en revêtement sur le tissu extensible.

2. Tissu ou vêtement selon la revendication 1, où les fibres élastomères sont présentes de 95 % à 100 % en poids du tissu extensible.

3. Tissu ou vêtement selon la revendication 1 comprenant de multiples couches comprenant :
(a) un tissu extensible comprenant 100 % de fibres élastomères en poids du tissu extensible et
(a) au moins un adhésif.

4. Tissu ou vêtement selon la revendication 3, où ledit adhésif est un adhésif thermofusible, un adhésif de contact, un thermoplastique, une dispersion aqueuse de polyuréthane-urée ou un non-tissé thermofusible.

5. Tissu ou vêtement selon la revendication 4, où ladite dispersion est exempte de solvant non aqueux.

6. Tissu ou vêtement selon la revendication 3, où l'adhésif est un mélange de polymères thermofusibles avec une dispersion aqueuse de polyuréthane-urée.

7. Tissu ou vêtement selon la revendication 3, où ledit tissu extensible est un tricot circulaire, un tricot chaîne, un tissu tissé et/ou un tissu non tissé.

8. Tissu ou vêtement selon la revendication 3, où ladite fibre élastomère est le spandex.

9. Tissu selon la revendication 3 comprenant de multiples couches comprenant :
(a) un tissu extensible comprenant 100 % de fibres élastomères en poids du tissu extensible et
(b) au moins un adhésif ; où l'adhésif est appliqué en revêtement sur ledit tissu extensible ; et
(c) au moins deux couches.

10. Tissu selon la revendication 9, où lesdites au moins deux couches sont choisies dans le groupe constitué par (a) deux couches de tissu, (b) deux couches de mousse, (c) une couche de tissu et une couche de mousse, et leurs combinaisons.

11. Tissu selon la revendication 9, où le tissu est moulé.

12. Tissu selon la revendication 9, où le tissu est pressé.

13. Tissu selon la revendication 9, où le tissu extensible et l'adhésif définis en (a) et (b) s'étendent sur toute la surface du tissu à multiples couches.

14. Tissu selon la revendication 9, où le tissu extensible et l'adhésif définis en (a) et (b) s'étendent sur une partie de la surface du tissu à multiples couches.

15. Procédé de fabrication d'un tissu ou d'un vêtement selon la revendication 3 comprenant :
(a) le fait de se procurer un tissu avec 100 % de fibres élastomères ;
(b) le fait d'ajouter des polymères adhésifs sur le tissu pour former un film adhésif ; et
(c) le fait de coller le film adhésif avec les tissus du vêtement.
